# EUROPEAN PATENT APPLICATION

(11) **EP 0 807 815 A1**
(43) Date of publication of application: **19.11.1997**
(21) Application number: 97303392.1
(22) Date of filing: 19.05.1997
(51) Int. Cl.: G01N 21/64, G01N 21/03

(54) **Optical sensor**

(30) Priority: 18.05.1996 GB 9610482
(71) Applicant: Merchant, David Frank, Wallasey, Merseyside L45 8LD (GB); Scully, Patricia Jane, Woolton, Liverpool L25 9SG (GB); Edwards, Robert, Ormskirk, Lancashire L39 1NR (GB); Grabowski, Josef, 61-688 Poznan (PL)
(72) Inventor: Merchant, David Frank, Wallasey, Merseyside L45 8LD (GB); Scully, Patricia Jane, Woolton, Liverpool L25 9SG (GB); Edwards, Robert, Ormskirk, Lancashire L39 1NR (GB); Grabowski, Josef, 61-688 Poznan (PL)
(74) Representative: W.P. Thompson & Co.

(57) **Abstract**

An optical sensor comprises a borosilicate glass or polymer tube (10) thorough which fluid under test is passed via an inlet (12) and an outlet (14). One end of the tube is provided with a plurality of parallel grooves (20) on its outer surface and each groove receives one end of a respective optical fibre (22), which is secured in place by optical adhesive (24). At the opposite end of the tube an electroluminescent film is located on the outer surface of the tube.

By embedding the optical fibres in the wall of the tube (10), it is possible to detect radiation i.e. fluorescence following excitation by radiation from the film (26) passing from the test fluid into the wall of the tube and thereafter into the embedded portions of the optical fibres to a sufficient extent to enable accurate measurements to be performed.

## Description

The present invention relates to optical fibre sensors and in particular, but by no means exclusively, to optical fibre sensors for detecting fluorescence, luminescence and refrative index variations in fluids and in solids immersed or suspended in fluids. The present invention is particularly suitable for use as a toxicity biosensor for monitoring toxic effluent by monitoring light emitted from a fluorescent product of a biochemical hydrolysis reaction by a colony of microorganisms immersed in the fluid under test.

The use of optical sensors incorporating optical fibres to detect light emitted by a fluorescent or luminescent fluid is well known. However, there are a number of problems associated with such existing sensors. Firstly, existing designs require a portion of optical fibre to protrude into the liquid under test. If the sensor is used for prolonged periods or in adverse chemical environments this exposed portion can be affected by direct damage or by the build-up of biological films within the device. The protrusion of the optical fibre precludes harsh chemical or physical cleaning methods to remove such films due to the inherent fragility of optical fibres.

Another disadvantage with existing sensors can arise when the sensor is used to detect fluorescent emissions by providing a source of excitation radiation that should not be detected by the sensor. To prevent this detection it is required to include optical filters in the light paths and these devices cause significant signal losses and additional expense.

With specific reference to the use of optical fibres to detect the measurand in such a sensor, a third disadvantage is that if the end face of the fibre is used as the sole point of entry into the fibre, the presented surface area is extremely small and therefore the efficiency of the detection process is poor.

It is thus an object of the present invention to provide an optical sensor which allows detection of electromagnetic radiation from a fluid under test and yet which does not suffer from the disadvantages associated with known sensors.

In accordance with the present invention an optical sensor comprises a test vessel having a vessel wall which is transparent to the wavelength of the radiation to be detected and one or more optical fibres mounted on the vessel, a portion of the length of the or each optical fibre being embedded in the vessel wall to detect radiation restricted within the outer surface of the wall.

It has been found that by embedding the or each optical fibre in the wall of the test vessel, it is possible to detect radiation passing from the test fluid into the wall of the test vessel and thereafter into the embedded portion of the optical fibre to a sufficient extent to enable accurate measurements of this radiation to be performed. The radiation is coupled longitudinally into the embedded portion of the or each optical fibre thereby increasing the detection efficiency by presenting a larger surface area.

The sensor is particularly, though not exclusively, designed for the detection of fluorescence and refractive index variations by monitoring the interaction of an external source of excitation radiation with the fluid. In such cases, the excitation radiation (which is typically provided by an electro-luminescent film) is directed through the vessel at a point distant to the embedded optical fibre or fibres. The radiation traverses the vessel and contained fluid and passes into the surrounding atmosphere due to the optical symmetry of the vessel and therefore it cannot interact with the optical fibre or fibres. If, however, the radiation is redirected within the fluid by a fluorescent or refractive index process it may be guided within the outer wall surface of the vessel by total internal reflection processes and therefore approach and interact with the embedded optical fibre or fibres. Preferably, the or each optical fibre is located within a respective groove formed in the wall, preferably in the outer surface of the wall of the test vessel. This may be conveniently achieved by cutting one or more grooves in the surface, the or each groove being adapted to receive a respective detecting optical fibre, or by forming the grooves from an additional layer of material applied to the surface of the test vessel and having similar optical properties to the vessel wall itself.

The or each optical fibre is preferably embedded, and the optical coupling may also be improved, by the use of an adhesive of suitable refractive index for securing the or each optical fibre in its respective groove.

The portion of the or each optical fibre embedded within the test vessel may be modified to enable increased coupling efficiency through the side walls of the optical fibre. This may be achieved by adding a length of optical fibre to the existing material, this extra length having a fluorescent-doped construction which permits efficient redirection of light from incident direction through the side of the fibre into guided rays within the core. This fluorescent-doped optical fibre couples the redirected light into the existing optical fibre for transfer to an optical detection system (such as a silicon optical power meter). Removal of the cladding material from the embedded portion of optical fibre can alternatively be used to produce a similar increase in coupling efficiency.

Preferably the sensor comprises a plurality of embedded optical fibres to detect radiation.

In one embodiment, the sensor comprises a glass or polymer tube of circular or elliptical cross-section. At one end of the tube one or more grooves are constructed by methods detailed earlier and a detecting optical fibre is secured in each of the grooves using optical adhesive. Optionally a length of fluorescent-doped optical fibre is added to the end of the optical fibre and is secured in each of the grooves and to the adjacent optical fibre using optical adhesive.

A radiation source in the form of an electro-luminescent film or a plurality of films may be wrapped around the tube at a suitable distance from the detecting region and illuminated by conventional driving methods. The tube may comprise couplings at each end to enable the passage of the test fluid through the tube.

The optical fibre or fibres are coupled to a detector device which converts the optical power within the fibres into an electrical signal. No optical filtering is required as the radiation emitted by the electroluminescent film is prevented from entering the fibres by the symmetry of the tube.

With reference to the detection of the refractive index of a fluid, a reduction of the distance between the embedded optical fibres and the excitation source can permit the device to detect such a parameter and the variation of same.

By way of example only, specific embodiments of the present invention will now be described, with reference to the accompanying drawings, in which:-
Fig. 1 is a perspective view of a first embodiment of optical sensor in accordance with the present invention;
Fig. 2 is a cross-section looking in the direction of arrows II-II of Fig. 1;
Fig. 3 is a detailed view of a portion of the sensor identified as III in Fig. 2;
Fig. 4 is a detailed cross-section of a single groove shown in Fig. 3, in a direction parallel to the axis of the embedded optical fibre; and
Fig. 5 is a detailed cross-section of a single groove shown in Fig. 3 in a second embodiment of optical sensor in accordance with the present invention.

Referring to the Figures, the optical sensor comprises an elongate borosilicate glass tube 10 which is coupled at both ends by apertured stoppers 12, 14 to a source of fluid via inlet tube 16 and a disposal point for the same fluid via an outlet tube 18. The fluid may be caused to flow through the sensor in either direction and at any velocity.

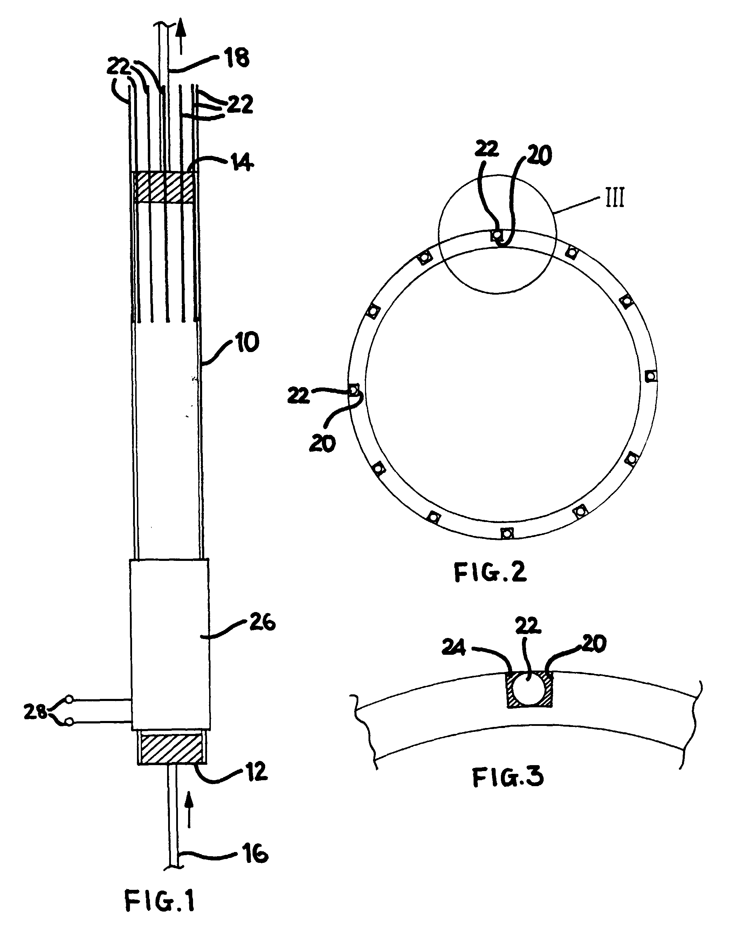

As can be seen in Figs. 2,3 and 4, one end of the glass tube is provided with a plurality of grooves 20 formed in the exterior surface of the wall. The grooves are parallel to each other and extend parallel to the longitudinal axis of the sensor for approximately one quarter of the total length of the tube 10.

In the illustrated embodiment twelve grooves 20 are so formed and the end of each of twelve optical fibres 22 is received in a respective groove. The optical fibres 22 in this embodiment are 1mm diameter polymer fibres and are transparent and undoped except for the sections 23 within the grooves. Each of the transparent optical fibres 22 is secured into respective grooves by means of an optical quality adhesive 24, in this case of refractive index 1.5, being similar to the refractive index of the walls. Although not illustrated, the twelve optical fibres are gathered into a bundle for connection to a detector device for subsequent measurement of the optical power transmitted within the fibres.

At the opposite end of the tube 10 a rectangular electroluminescent film 26 of dimensions suitable to surround the tube circumference and extend along the tube length by 50mm is wrapped around the tube at a distance of approximately 100 to 150mm from the ends of the embedded optical fibres. The electroluminescent film 26 is conventional and produces light upon application of an alternating voltage supplied by connections 28.

In operation of the sensor, the electro-luminescent film 26 is selected so that when actuated it will produce radiation of a particular wavelength, e.g. 495nm. The detector to which the optical fibres 22 are connected is also activated and the fluid under test (e.g. water) is passed through the tube 10 by means of a suitable pump. In a known manner, a solution of a substrate of fluorescein (e.g. fluorescein diacetate or FDA) is added to the fluid. When organisms are present in the fluid, this substrate is hydrolysed to release fluorescein into the fluid. If these organisms are present in the fluid at a point before entry of the fluid into the sensor, this fluorescein will be detected by the fact that it will emit fluorescent light at 515-520nm when excited by the electroluminescent film. The rate of the hydrolysis reaction is related to the cellular health of the organisms. Since the substrate does not fluoresce, by monitoring the fluorescent intensity of the fluid over time it is possible to directly monitor the cellular viability of the organisms and thus the toxicity of the fluid they are immersed within.

In the optical sensor illustrated, the electroluminescent film emits a diffuse pattern of light that traverses the tube walls 1 and the fluid contained therein. Since the tube is optically symmetrical in cross-section this light, due to the fact it originates external to the tube wall, cannot resist passing out of the tube wall after one transition. The light is therefore only present within the tube for a short distance beyond the region of the film, and cannot interact with the optical fibres. However, the light may cause any fluorescein in the region of the tube surrounded by the electroluminescent film to fluoresce and as each fluorescein molecule behaves as an approximately symmetrical point source, there is a significant amount of fluorescent light incident on the tube at angles permitting total internal reflection at the outer tube boundary where the glass surface meets the surrounding air. This light is therefore guided within the tube and can traverse towards the region of the optical fibres where it can interact with them and produce light guided within the cores of the fibres.

The fibres must be embedded within the walls of the tube as the guided light is confined within them and cannot be detected beyond the outer wall surface.

By measuring the amount of light within the fibres 7 the amount of fluorescein can be inferred and from this information the toxicity of the fluid determined using information on the organisms and the rate of introduction of the fluorescein substrate. As the sensor does not permit the light emitted by the electroluminescent film to enter the fibres there is no requirement to employ optical filters.

By varying the separation of the electroluminescent film and the optical fibres it is possible to optimise the sensor for fluids of varying optical properties. There is no defined restriction on the dimensions of the tube described in this embodiment, so the sensor can be designed to be inserted directly into existing pipe systems.

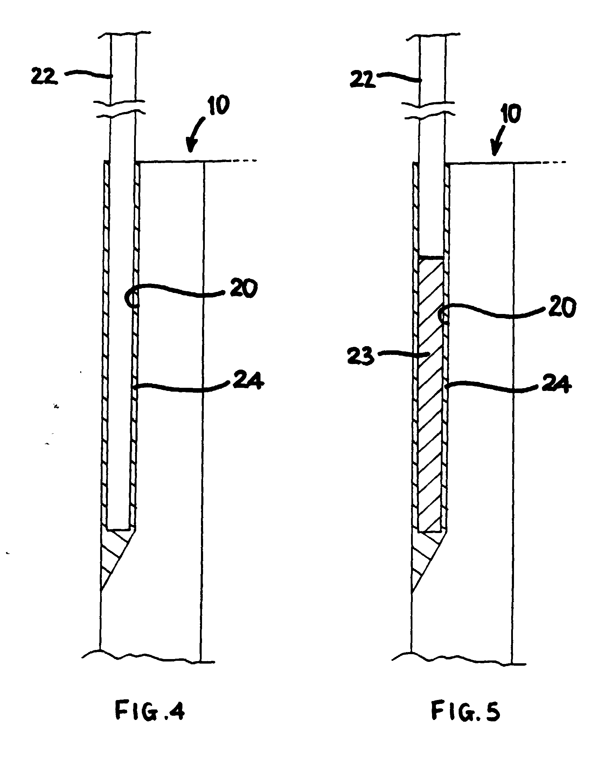

The second embodiment is very similar to the first embodiment, the only differences being in the portion optical fibres located in the grooves 20, as shown in Fig. 5. In contrast to the first embodiment, each of the first optical fibres 22 adjoins a length of fluorescent optical fibre 23 also within the groove. The optical fibres 22 and the respective fluorescent optical fibres 23 are secured to each other and secured in the grooves by means of optical adhesive.

The invention is not restricted to the details of the foregoing embodiments. For example, the precise nature of the excitation light source is not restricted to that described and alternative devices may be employed in situations where an electroluminescent film is unsuitable. The tube material may be selected from any glass or polymer material with suitable optical, chemical and physical properties. Also, the embodiment has been described as having twelve optical fibres. However, this number can be as little as one or could be greater than twelve, depending on the chosen tube diameter and the parameters of the detection being attempted. Also, the grooves constructed in the tube walls need not extend parallel to the tube axis and may, for example, by formed helically around the tube wall. Embodiments of the present invention may also employ more than one array of grooves placed at different positions along a length of tube, permitting the monitoring of the position of fluorescent molecules as they flow along the tube. In all embodiments, however, it is intrinsic to the design of the present invention that there is a portion of optical fibre or fibres embedded physically, chemically or optically into the material of the walls of the test vessel.

## Claims

1. An optical sensor comprising a test vessel (10) having a vessel wall which is transparent to the wavelength of the radiation to be detected and one or more optical fibres (22) mounted on the vessel, characterised in that a portion of the length of the or each optical fibre (22) is embedded in the vessel wall to detect radiation restricted within the outer surface of the wall.

2. An optical sensor as claimed in claim 1, wherein the or each optical fibre (22) is located in a respective groove (20) formed in the vessel wall.

3. An optical sensor as claimed in claim 2, wherein the or each groove (20) is formed in the outer surface of the vessel wall.

4. An optical sensor as claimed in claim 1, wherein the or each optical fibre (22) is embedded in an additional layer of material applied to the surface of the vessel wall and having similar optical properties to the vessel wall.

5. An optical sensor as claimed in any of the preceding claims, further comprising adhesive (24) of suitable refractive index for embedding the or each optical fibre (22).

6. An optical sensor as claimed in any of the preceding claims, wherein the vessel comprises an inlet (12) and an outlet (14) to allow fluid under test to flow through the vessel.

7. An optical sensor as claimed in claim 6, wherein the vessel (10) comprises a glass or polymer tube.

8. An optical sensor as claimed in any of the preceding claims, further comprising a source (26) of excitation radiation.

9. An optical sensor as claimed in claim 8, wherein the source of excitation radiation (26) is located remotely from the or each optical fibre (22) to minimise the detection of radiation received by the optical fibres directly from the source of excitation radiation.

10. An optical sensor as claimed in claim 9, wherein the source of excitation radiation comprises an electroluminescent film (26) on the exterior of the vessel.

11. An optical sensor as claimed in any of the preceding claims, wherein the or each optical fibre (22) comprises a first portion of a first material and a second portion of a second material, the second portion (23) being embedded in the vessel wall and being optically coupled to the first portion.

12. An optical sensor as claimed in claim 11, wherein the second portion comprises a fluorescent optical fibre (23).
